# EUROPEAN PATENT SPECIFICATION

(11) **EP 2 544 552 B1**
(45) Date of publication and mention of the grant of the patent: **23.04.2014**
(21) Application number: 10709713.1
(22) Date of filing: 08.03.2010
(51) Int. Cl.: A23F 5/44, A23L 1/015, A23B 7/01

(54) **TREATMENT OF CHICORY**
BEHANDLUNG VON CHICORÉE
TRAITEMENT DE LA CHICORÉE

(43) Date of publication of application: 16.01.2013
(73) Proprietor: Nestec S.A., 1800 Vevey (CH)
(72) Inventor: LABRUNIE, Thierry, CH-1804 Corsier sur Vevey (CH); KILCHHERR, Sylvain, CH-1297 Founex (CH); DUFFEY, Jean-Louis, F-74500 Lugrin (FR); MATHYS, Alexander, 49076 Osnabrueck (DE); PALZER, Stephan, York YO32 9FX (GB); THEURILLAT-MORITZ, Viviane, Andrée, Claude, CH-1350 Orbe (CH)
(74) Representative: Elleby, Gudrun
(86) International application number: PCT/EP2010/052926
(87) International publication number: WO 2011/110215

(56) References cited:
- EP-A1- 2 160 948
- WO-A1-2006/121397
- WO-A2-2004/075657
- WO-A2-2005/094591
- CN-A- 101 037 480
- US-A1- 2007 141 225
- US-A1- 2007 212 450
- Anonymous: "FAO/WHO Joint FAO/WHO expert Commitee on food Additives, sixty-fourth meeting, summary and conclusions", , 2005, XP002609585, Retrieved from the Internet: URL:http://www.who.int/ipcs/food/jecfa/sum maries/summary_report_64_final.pdf [retrieved on 2010-11-11]
- LOGINOVA K V ET AL: "Acceleration of soluble matter extraction from chicory with pulsed electric fields", JOURNAL OF FOOD ENGINEERING, BARKING, ESSEX, GB, vol. 96, no. 3, 1 February 2010 (2010-02-01), pages 374-379, XP026676385, ISSN: 0260-8774, DOI: DOI:10.1016/J.JFOODENG.2009.08.009 [retrieved on 2009-08-14]

## Description

### TECHNICAL FIELD

The present invention relates in general to a method for treating chicory in order to reduce acrylamide formation during subsequent processing steps such as roasting and extraction. After this treatment, the treated chicory may be processed to prepare soluble beverage compositions such as soluble coffee-substitute compositions or soluble coffee-mixture compositions.

### BACKGROUND OF THE INVENTION

Acrylamide was classified by the WHO International Agency for Research on Cancer (IARC) as a probable human carcinogen in 1994 on the basis of animal studies. At the time, it was believed that exposure resulted mainly from smoking and occupational activities. In April 2002, it was found that some food products, especially starchy foods such as crisps, French fries and bread, contained significant levels of acrylamide. Although no clear correlation between dietary intake of acrylamide and cancer risk has been evidenced, efforts are now made to minimize dietary exposure to acrylamide.

Acrylamide is one of the reaction products generated in foods during frying, baking or roasting, in Maillard reaction processes at high temperatures (e.g. above 120°C). Acrylamide results from the reaction between reducing sugars such as glucose and fructose with the lateral chain of some amino acids such as asparagine and methionine. The Maillard reaction is a desired reaction in food processing because it provides pleasant odour and taste to cooked foods, together with a change in colour.

A number of publications deal with the reduction of formation of acrylamide during food processing. For instance an article by Amrein, T. et al. in J. Agric. Food Chem. (2004) 52:4282, describes that the acrylamide concentration can be reduced by more than 60% when using sodium hydrogencarbonate instead of ammonium hydrogenocarbonate as baking agent in the manufacture of gingerbread.

US 2004/0224066 also deals with a method for suppressing acrylamide formation by treating a food product with an acrylamide-formation suppressing agent prior to a high temperature heating step. The acrylamide-formation suppressing agent may be selected from a multivalent cation, a chelating compound, a carbonyl group blocker or a combination of any of these agents.

An acrylamide generation depressant comprising a calcium salt, a basic amino acid or its salt and/or rosemary extract and being added to a processed food consisting mainly of carbohydrate prior to heat treatment is the subject of JP2005-278448.

US 2004/0126469 is also concerned with a method for decreasing acrylamide in food cooked under heat by providing the food with a polyvalent metallic compound.

In addition, US 2007/178219 pertains to acrylamide-reducing agents which are added to cell walls having asparagine and which have been weakened.

A review of the potential strategies of control of acrylamide formation in food products is found in an article by Stadler, R. H. et al. in Nutrition Reviews, 2004, vol. 62, no. 12, 449-467. This article insists on the fact that due to the wide variety of food matrices and food processing methods, it is very difficult to provide guidelines applicable in each case.

The prior art cited above deals mainly with acrylamide generation upon heat-treatment of starch-based products, such as potato-based or cereal-based food products. It is also in many cases linked to the processing of these food products with fats or oils.

WO 2005/094591 discloses a process for the reduction of acrylamide in coffee-based food processing, wherein the process comprises the steps of 1) Soaking raw coffee beans in a citrate/phosphate buffer, and 2) roasting the coffee beans in a roasting oven.

Co-pending European patent application EP 08163899 relates to a method of manufacture of roasted chicory with the objective of reducing acrylamide formation during the roasting process. The method comprises a step of soaking fresh chicory pieces with a divalent cation aqueous solution. However, this application does not address industrial scale processing of chicory.

Hence, there is a need to provide a method to overcome acrylamide generation in the manufacture of coffee mixtures and coffee-substitute powdered beverage compositions which comprise chicory, at an industrial scale. Preferably, this method should have minimal impact on organoleptic properties of the powdered beverage.

### SUMMARY OF THE INVENTION

An object of embodiments of the invention is thus to provide an adapted processing method for the manufacture of coffee mixtures or coffee substitutes comprising roasted chicory, which minimises the production of undesirable compounds. The method should have minimal impact on the visual and organoleptic properties of coffee mixtures or coffee substitutes.

This object is solved by means of the independent claims. The dependent claims further develop the central idea of the invention.

Thus, an aspect of the invention is a method of treatment of chicory pieces which comprises a step of soaking non-roasted chicory pieces with an aqueous solution comprising divalent cations, followed by a step of steaming said chicory pieces.

These and other aspects, features and advantages of the invention will become apparent to those skilled in the art upon reading the disclosure provided here in connection with the attached drawings. The detailed description, while indicating preferred embodiments of the invention, is only given by way of illustration.

### BRIEF DESCRIPTION OF THE DRAWINGS

The invention is described in the following by making reference to the following figures, which illustrate some preferred embodiments of the invention:
Figure 1 shows the roasting time of chicory as a function of the calcium chloride concentration used for soaking the chicory prior to roasting.
Figure 2 shows the impact of a calcium chloride pretreatment on acrylamide formation.
Figure 3 shows the impact of soaking chicory with magnesium chloride prior to roasting on acrylamide levels in roasted chicory.
Figure 4 shows a schematic line for soaking chicory pieces in a bath.

### DETAILED DESCRIPTION OF THE INVENTION

The present invention is part of a method for the manufacture of roasted chicory. It was found that less acrylamide is formed during a heat treatment such as roasting, when the heat treatment is performed on chicory soaked with divalent cations, instead of untreated chicory. The amount of acrylamide in the heat treated products is therefore considerably reduced compared to heat treated products having not undergone the soaking step of the present invention. As a comparison, acrylamide content in roasted chicory may range between 800 ppb and 10800 ppb. In Europe, acrylamide content in roasted chicory usually ranges between 3000 ppb and 10800 ppb. This variability reflects the differences between varieties, climates, crop and roasting conditions. The method of the invention allows a reduction of at least 60% of the acrylamide level in roasted chicory. In some cases, the reduction of the acrylamide level in roasted chicory may be greater than 75 %, or even 90 %. This provides a great advantage over methods of the prior art.

By "chicory" is meant chicory roots, and more precisely roots of the plant *Cichorium intybus* L., as used in the art in the manufacture of chicory-based products and coffee substitutes comprising chicory. Other coffee substitutes are known. Usually, they undergo various treatments, including roasting, before being used as coffee substitutes. Further examples of coffee substitutes are wheat bran, barley, malt, rye, acorns, figs, groundnuts, dates, carobs, lupins, chickpeas, or soy beans.

The fresh chicory roots are washed to remove dirt and stones. Then, typically, the washed chicory is chopped into pieces such as chips, cubes or slices. Usually, said pieces have a dimension of about 10 to 50 mm. For instance, chicory slices or slices may be from about 5 mm to about 10 mm thick, for instance 8 mm thick, and from 10 to 50 mm long. Cubes may have side dimensions ranging from about 8 mm to about 15 mm. Here, the word "cube" is not intended to mean only perfectly regular cubes. It also encompasses pieces that have an overall cube shape.

Usually, fresh chicory has a water content of about 75% by weight. For this reason, it is very sensitive to mold and other microbial spoilage. Fresh chicory cannot be stored long and must be processed within a short timeframe after harvest, usually less than 3 weeks under cold conditions. Drying the fresh chicory pieces to a water content of below 15% weight, preferably to a water content of between 10 and 13% by weight may be useful. Indeed, chicory pieces thus may be stored for later use. This has two advantages. First, production can be performed throughout the year by using dried chicory instead of fresh chicory as a starting material. Second, the plants and equipments need not be dimensioned to process all the fresh chicory in a very short period of time. Instead, plants and equipments with smaller capacity can be commissioned, but with the perspective of working throughout the year.

Chicory pieces are soaked with at least one divalent cation in aqueous solution. The divalent cation should be food-grade. Preferably the divalent cation is selected from calcium, magnesium or mixtures thereof. The divalent cation is provided as a food-grade salt. For instance, the salt may be selected among chloride, sulphate, phosphate or carbonate salts, or mixtures thereof. In an embodiment, calcium chloride, magnesium chloride, calcium sulphate, magnesium sulphate or calcium carbonate are used, or mixtures thereof. In another embodiment, chloride salts are used. The aqueous solution may be a calcium chloride solution or a magnesium chloride solution. In another embodiment, sulphate salts are used. Preferably, the aqueous solution is a magnesium sulphate solution. To prepare the aqueous solution the selected salt or salts is dissolved into water, up to the desired divalent cation concentration. Then the aqueous solution is used for soaking the chicory pieces. It is also possible to prepare a concentrate divalent cation solution which is dosed into water to prepare the soaking solution.

The soaking step may be carried out by many methods. For instance, it may include spraying, coating, dipping or washing.

In an embodiment, chicory pieces are soaked by spraying the soaking solution on the chicory pieces. For instance, chicory pieces are distributed on a conveyor belt that transports the chicory pieces into a spraying tunnel. Spraying nozzles are distributed along the transport path. The nozzles are fed with the aqueous solution under pressure in order to generate a mist into the spraying tunnel and thus soak the chicory pieces with the aqueous solution of divalent cation. In another installation, the chicory pieces are fed into a rotating drum. The drum can be inclined to allow for gravitational transport of the chicory pieces through it. The drum can also be equipped inside with helicoidal blades for conveying the chicory pieces through it. The drum is equipped with nozzles as described above. In each case, a continuous soaking is achieved. Excess soaking solution can be collected. Then the divalent cation concentration can be adjusted before recirculation.

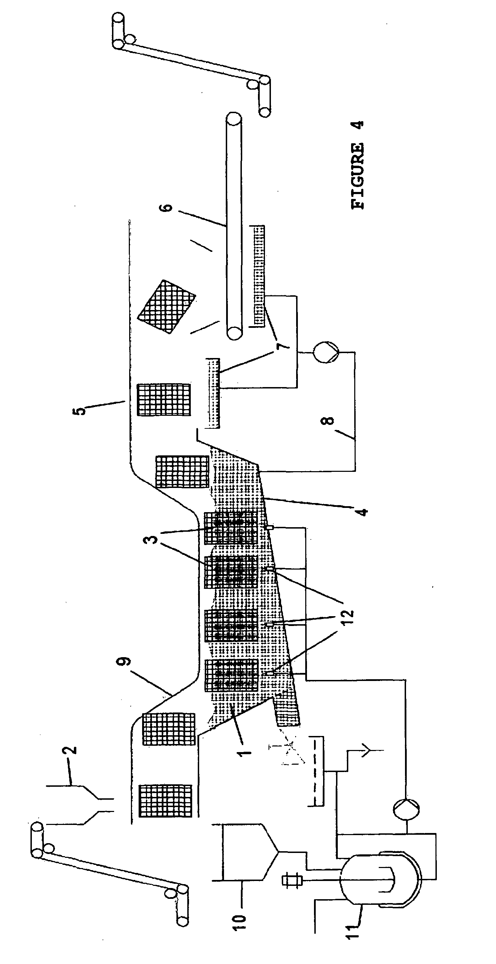

In another embodiment as shown schematically on figure 4, the soaking step is carried out by placing the chicory pieces into a bath 1 of the soaking solution, for a predetermined period of time, with or without agitation. Soaking may be achieved in a continuous process or a batch process and various installations may be designed by a skilled person. For instance, chicory pieces are poured from a hopper onto a conveyor belt that circulates in said soaking solution. After the soaking step, the chicory pieces are removed from the bath, and can be used in downstream processes. In another installation, the chicory pieces are poured from a hopper 2 into a container 3 with walls that retain the chicory pieces inside the container while allowing water to flow through the container. The container is placed in a tank containing the soaking solution for a predetermined period of time. Instead of being static in the tank, the container can be transported through tank 4 in the soaking solution with an overhead conveyor 9. Once the chicory pieces are soaked, they are removed from the bath, excess solution is drained at a draining station 5 and the soaked chicory pieces can be discharged from the container 3 onto a conveyor belt 6 and used in downstream processes. Drained solution is collected 7 and recirculated 8. From time to time, it may be necessary to adjust the divalent cation concentration in the soaking solution, due to the progressive exhaustion of the solution during soaking of the chicory pieces. Dosing 10 and mixing 11 equipment are provided to prepare the soaking solution, which is then circulated towards the bath through nozzles 12.

When the soaking step is performed by placing the chicory pieces in a bath of the soaking solution, it may be useful to apply a pulsed electric field (PEF) to the chicory pieces. It has been found that such a treatment improves the penetration of the soaking solution into the chicory pieces. An explanation could be that such electric fields break up the microstructure of the chicory pieces, at least on the surface of the pieces. This is even clearer when dried chicory is used as the starting material. In a typical PEF treatment, the total energy applied on the chicory pieces varies from 10 kJ/kg to 200 kJ/kg, preferably from 70 kJ/kg to 170 kJ/kg. For instance, a PEF treatment lasts between 10 seconds and 10 minutes, with a voltage of 15 kV to 25 kV per pulse, and a frequency of between 150 and 250 pulses/minute.

Different soaking methods may be combined successively. The duration of the bath treatment may be split into periods with or without simultaneous PEF treatment. For instance, the chicory pieces may be placed in a bath of soaking solution for 10 minutes to a few hours. Then a PEF treatment may be triggered in the same bath, for a few seconds to 10 minutes.

Overall, it has been found that the PEF treatment allows for a shorter soaking step.

The soaking step may be carried out both on dried chicory or on fresh chicory. Thus, in an embodiment, the non-roasted chicory pieces are fresh chicory pieces. In another embodiment, the non-roasted chicory pieces are dried chicory pieces. Preferably in this case, the overall relative humidity of the chicory pieces is brought back to between 20% and 75% by weight. If the overall relative humidity is lower than 50%, it appears that the divalent cations penetrate less into the chicory pieces. However, the steaming step then helps improve the diffusion of the soaking solution into the chicory pieces.

During soaking, it is believed that the soaking solution diffuses into the chicory pieces, which allows the divalent cations to impregnate the chicory pieces. Thus, the soaking time depends on the size of the chicory pieces and on whether dried or fresh chicory is used. The soaking time also depends on the concentration of the soaking solution and on the soaking method which is implemented. When the soaking step is performed in a bath of soaking solution or by spraying, the soaking step can last from about 15 minutes to 24 hours. The duration of the soaking step will decrease when the concentration of divalent cations in the soaking solution increases. In these conditions, the soaking step can last between 10 minutes and 3 hours when using fresh chicory. The duration depends mainly on the divalent cations concentration of the soaking solution. However, more time will be needed to perform the soaking step with dried chicory. In general, between 30 minutes and 24 hours will be needed when processing dried chicory. When soaking is performed in a bath of soaking solution with PEF, the length of the soaking step is reduced: it can last between 10 seconds and 10 minutes.

The soaking step is preferably carried out at ambient temperature, usually less than 25°C, and preferably between 4 and 10°C. It was found that the temperature of soaking does not seem to have an impact on the reduction of acrylamide formation, compared to heated water. Therefore, soaking the chicory pieces at these preferred temperatures reduces the energy costs while causing no negative influence on the efficiency of the method of the invention.

Preferably, the concentration of divalent cations in the aqueous solution used for soaking is at least about 1.0 wt%. The concentration of divalent cations may be as high as the saturation concentration. The saturation concentration depends on the salt used, or mix of salts. An advantage of using a highly concentrated soaking solution is that the soaking time may be reduced. The step of steaming then helps improving penetration of the soaking solution into the chicory pieces.

The soaking step offers the further advantage that the roasted chicory is enriched in minerals such as calcium and magnesium, which provide the associated health benefits.

It has been found that an additional step of steaming the soaked chicory pieces further reduces the acrylamide levels in roasted chicory. It is believed this can be explained by an improved penetration of the soaking solution into the chicory pieces. Thus, the method of treatment of chicory pieces further comprises a step of steaming the soaked chicory pieces.

In an embodiment, the steaming step is performed at a temperature from 95°C to 150°C, under a pressure from atmospheric pressure to 6 bars. Atmospheric pressure is about 1 bar. Preferably, the steaming step is performed for 2 minutes to 2 hours. The length of the steaming step increases when the pressure or the temperature decrease. When a temperature above 130°C is used for the steaming step, this operation should be performed fast, preferably between 2 and 15 minutes, in order to avoid a too important denaturation of the chicory product.The steaming step may be performed in appropriate equipment, such as a steamer, an autoclave or a stove.

Acrylamide content can be measured by LC-MS/MS. A method for sample preparation and acrylamide measure is described for instance in an article by Delatour et al. "Improved sample preparation to determine acrylamide in difficult matrixes such as chocolate powder, cocoa, and coffee by liquid chromatography tandem mass spectroscopy" J. Agric. Food Chem. (2004) 52:46251, or in an article by Arisseto et al. "A modified sample preparation for acrylamide determination in cocoa and coffee products" Food Anal. Methods (2008) 1:49.

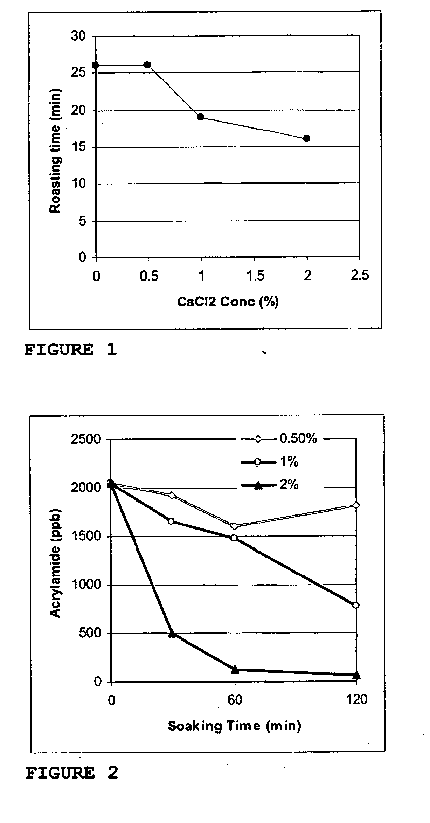

Additionally, as illustrated in figure 1, it was surprisingly found that the soaking treatment of chicory pieces with divalent cations allows the reduction of the subsequent roasting time when the level of roasting is checked via colour measurement. In other words, when a roasting temperature is set, roasting time is shorter when processing soaked chicory pieces rather than non-soaked chicory pieces. Conversely, it is assumed that roasting may also be achieved at a lower temperature.

Roasting has the effect of providing the desired visual appearance to the coffee or coffee substitute. Flavours and aromas also develop during roasting.

Manufacturing conditions of roasted chicory are known to the skilled artisan. Thanks to the soaking step carried out before roasting, it is possible to either reduce the roasting temperature or the roasting time. For example, the roasting may be carried out at a temperature of 100 to 200°C, preferably 130-180°C. The roasting temperature is not necessarily maintained at a constant level. In an embodiment, the roasting temperature is increased from between 130°C and 150°C to between 160°C and 175°C in the last minutes of roasting.

Roasting is terminated when the chicory pieces have reached the desired colour. This is assessed using sensory evaluation, which also takes into account further criteria such as flavour or smell.

This provides the advantages that energy costs are saved, thanks to the shorter heating time or lower roasting temperature.

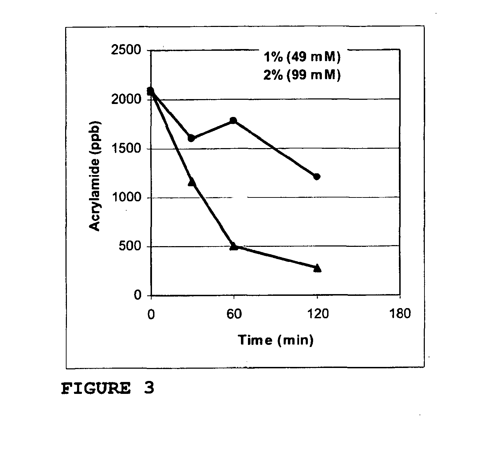

Figure 3 shows the influence of the concentration of divalent cations and of the soaking time on acrylamide formation when using magnesium chloride as the divalent cation salt. In particular, fig. 3 shows that a reduction of about 87% on acrylamide level upon roasting is obtained upon soaking the coffee substitute with a 2 wt% magnesium chloride aqueous solution for 2 hours.

After soaking, the chicory is preferably dried before roasting. Preferably, drying parameters are set in order to reach shelf-stable moisture content, as described above for untreated chicory. Drying may be carried out using standard industrial methods known in the art such as drying in the sun or drying using various apparatus such as a drying drum, a drying tunnel or a belt drier. The drying time depends on the drying method and on the target humidity. For instance, drying in the sun may take up to 36 hours, whereas drying in a tunnel could be as short as a few hours, for instance 4 hours. For instance, in a tunnel drier, a drum drier or a belt drier, hot air is blown through the drier, at a temperature usually between 150°C and 500°C and the chicory pieces are moved in a direction opposite to the air flow. In that case, drying is carried out in a few hours. Preferably, the humidity of the chicory pieces after drying is below 18% humidity, and more preferably below 15%. The final humidity of the chicory pieces should not be too low, otherwise the subsequent roasting step will not allow for a satisfactory flavour and colour development. Thus, in a preferred embodiment, the final humidity is greater than 10%. Preferably, the final humidity of the dried chicory pieces is about 12%.

After the optional drying step, the soaked non-roasted chicory is roasted. Preferably, the roasting is carried out at a temperature of 110 to 180°C, more preferably about 120 to 160°C. Preferably, the roasting step is carried out for a period of 10 to 120 minutes, more preferably about between 60 and 90 minutes.

The prior soaking step offers the advantage that the roasting time and/or the roasting temperature can be considerably reduced. Indeed, the colour development desired upon roasting is achieved much more rapidly than in cases where the soaking step has not been carried out. Thus, the shorter roasting time or lower roasting temperature compared to traditional roasting time or temperature required to roast chicory enables energy savings, as well as provides the final product with very good visual and organoleptic properties.

The product obtainable by any embodiments of the method described above thus also forms part of the invention. Such product offers the advantages that the amount of acrylamide present in such product is considerably reduced compared to products obtained by traditional roasting processes. In embodiments of the invention, the products obtainable by the process have an acrylamide content of less than 2500 ppb (parts per billion), preferably less than 2000 ppb, and even more preferably less than 1800 ppb. In further embodiments of the invention, the products obtainable by the process have an acrylamide content of less than 1500 ppb, preferably less than 900 ppb. For instance, the products obtainable by the process have an amount of acrylamide of less than 500 ppb, preferably less than 300 ppb, and more preferably less than 150 ppb. Furthermore, they are enriched in terms of calcium and/or magnesium when using these preferred cations in the soaking step of the invention. The resulting products are thus healthier, while having excellent organoleptic and visual properties.

The roasted chicory obtainable by the method of the invention may be used as such or may be further processed depending on the desired end product. Such further processing step may include grinding, mixing, extraction, spray-drying, freeze-drying etc.

For instance, roasted and ground (R&G) chicory may be used as such as a coffee substitute. In such a use, R&G chicory may be used to brew a beverage, which is considered as a coffee substitute, with a traditional filter coffee-machine for instance. R&G chicory could also be mixed with R&G coffee, to obtain a coffee mixture, which may also be used to brew a coffee-like beverage.

In the context of the instant invention, "coffee mixtures" should be understood as compositions comprising coffee solids and chicory solids. Coffee mixtures may optionally comprise other ingredients such as other coffee substitutes, sweeteners, whiteners, foamers, and mixtures thereof. Still in the context of the instant invention, "coffee substitutes" relate to compositions which comprise chicory solids and optionally other ingredients such as other coffee substitutes, sweeteners, whiteners, foamers, and mixtures thereof. Coffee substitutes do not comprise coffee solids.

Such coffee substitute lends itself perfectly for incorporation in coffee-based food products or beverages, such as instant drink compositions for example. Instant drink coffee mixtures are considered. For instance, roasted chicory prepared according to the method disclosed herein may undergo an extraction, alone or together with various amounts of roast and ground coffee, under conditions known to the skilled person. This results in a chicory extract or a coffee and chicory extract, which may be used in the manufacture of instant drink compositions.

A soluble coffee mixture composition or coffee substitute composition comprising the roasted chicory of the invention is thus also part of the invention.

Such soluble composition can be in the form of freeze-dried or spray-dried granules, freeze-dried or spray-dried powders, concentrates, etc. as is known in the art to a skilled person.

### EXAMPLE

A container was filled with dried chicory slices. Then a saturated solution of divalent cations salts (MgCl₂ or MgSO₄) was poured into the container to bath the chicory slices. A pulsed electric field was applied, for a total energy of 150 kJ/kg. After treatment, the solution was drained and the chicory pieces were placed in an autoclave under a pressure of 3 bars, a temperature of 130°C and during 10 minutes. Chicory pieces with a relative humidity of about 60% were obtained then dried in a drum dryer down to a relative humidity of about 12%. Roasting was then performed according to known methods.

The level of acrylamide in the roasted chicory was measured. The acrylamide level was lower in the treated chicory than in a sample of chicory which had not been treated with divalent cations. The levels of acrylamide were reduces by about 50% to 80% in the treated chicory, depending on the salt used.

Although preferred embodiments have been described in the foregoing description, it will be understood that the invention is not limiter to the specific embodiments disclosed. Various modifications may become apparent to those of ordinary skill in the art and may be acquired from practice of the invention. It will be understood that the materials used and the chemical details may be slightly different or modified from the descriptions herein without departing from the methods and compositions disclosed and taught by the present invention.

## Claims

1. Method of treatment of chicory pieces which comprises a step of soaking non-roasted chicory pieces with an aqueous solution comprising divalent cations, followed by a step of steaming said chicory pieces.

2. Method according to claim 1, wherein the soaking step is performed by spraying said solution onto the chicory pieces.

3. Method according to claim 1, wherein the soaking step is performed by placing said chicory pieces in a bath of said solution.

4. Method according to claim 3, wherein a pulsed electric field is applied to said chicory pieces during the soaking step.

5. Method according to claim 4, wherein a total energy of from 10 kJ/kg to 200 kJ/kg is applied to said chicory pieces using pulsed electric field.

6. Method according to any one of claims 1 to 5, wherein the steaming step of said chicory pieces is performed at a temperature from 95°C to 150°C, under a pressure from atmospheric pressure to 6 bars.

7. Method according to any one of claims 1 to 6, wherein said non-roasted chicory pieces are dried chicory pieces.

8. Method according to any one of claims 1 to 6, wherein said non-roasted chicory pieces are fresh chicory pieces.

9. Method according to any one of claims 1 to 8, wherein said divalent cations are selected from calcium, magnesium or mixtures thereof.

10. Method according to any one of claims 1 to 9, which comprises a step of drying the chicory pieces after the step of steaming.

11. Method according to any one of claims 1 to 9, which comprises an optional step of drying the chicory pieces after the step of steaming, and a step of roasting the chicory pieces.

## Patentansprüche

1. Verfahren zur Behandlung von Chicoréestücken, das einen Schritt des Einweichens von nicht gerösteten Chicoréestücken in einer wässrigen Lösung aufweist, die zweiwertige Kationen aufweist, gefolgt von einem Schritt des Dünstens der Chicoréestücke.

2. Verfahren nach Anspruch 1, wobei der Schritt des Einweichens durchgeführt wird, indem die Lösung auf die Chicoréestücke gesprüht wird.

3. Verfahren nach Anspruch 1, wobei der Schritt des Einweichens durchgeführt wird, indem die Chicoréestücke in Bad der Lösung gegeben werden.

4. Verfahren nach Anspruch 3, wobei während des Schrittes des Einweichens ein gepulstes elektrisches Feld auf die Chicoréestücke angewendet wird.

5. Verfahren nach Anspruch 4, wobei bei Verwendung des gepulsten elektrischen Feldes eine Gesamtenergie von 10 kJ/kg bis 200 kJ/kg auf die Chicoréestücke angewendet wird.

6. Verfahren nach einem der Ansprüche 1 bis 5, wobei der Schritt des Dünstens der Chicoréestücke bei einer Temperatur von 95 °C bis 150 °C unter einem Druck, der zwischen Atmosphärendruck und 6 bar liegt, durchgeführt wird.

7. Verfahren nach einem der Ansprüche 1 bis 6, wobei die nicht gerösteten Chicoréestücke getrocknete Chicoréestücke sind.

8. Verfahren nach einem der Ansprüche 1 bis 6, wobei die nicht gerösteten Chicoréestücke frische Chicoréestücke sind.

9. Verfahren nach einem der Ansprüche 1 bis 8, wobei die zweiwertigen Kationen aus Kalzium, Magnesium oder Mischungen daraus ausgewählt sind.

10. Verfahren nach einem der Ansprüche 1 bis 9, das einen Schritt des Trocknens der Chicoréestücke nach dem Schritt des Dünstens aufweist.

11. Verfahren nach einem der Ansprüche 1 bis 9, das einen optionalen Schritt des Trocknens der Chicoréestücke nach dem Schritt des Dünstens und einen Schritt des Röstens der Chicoréestücke aufweist.

## Revendications

1. Procédé de traitement de morceaux de chicorée, qui comprend une étape de trempage de morceaux de chicorée non torréfiées avec une solution aqueuse comprenant des cations divalents, suivie par une étape de cuisson à la vapeur desdits morceaux de chicorée.

2. Procédé selon la revendication 1, dans lequel l'étape de trempage est réalisée en pulvérisant ladite solution sur les morceaux de chicorée.

3. Procédé selon la revendication 1, dans lequel l'étape de trempage est réalisée en plaçant lesdits morceaux de chicorée dans un bain de ladite solution.

4. Procédé selon la revendication 3, dans lequel un champ électrique pulsé est appliqué auxdits morceaux de chicorée pendant l'étape de trempage.

5. Procédé selon la revendication 4, dans lequel une énergie totale comprise entre 10 kJ/kg et 200 kJ/kg est appliquée auxdits morceaux de chicorée en utilisant le champ électrique pulsé.

6. Procédé selon l'une quelconque des revendications 1 à 5, dans lequel l'étape de trempage desdits morceaux de chicorée est réalisée à une température comprise entre 95°C et 150°C, sous une pression comprise entre la pression atmosphérique et 6 bars.

7. Procédé selon l'une quelconque des revendications 1 à 6, dans lequel lesdits morceaux de chicorée non torréfiées sont des morceaux de chicorée séchées.

8. Procédé selon l'une quelconque des revendications 1 à 6, dans lequel lesdits morceaux de chicorée non torréfiées sont des morceaux de chicorée frais.

9. Procédé selon l'une quelconque des revendications 1 à 8, dans lequel lesdits cations divalents sont choisis parmi le calcium, le magnésium ou des mélanges de ceux-ci.

10. Procédé selon l'une quelconque des revendications 1 à 9, qui comprend une étape de séchage des morceaux de chicorée après l'étape de cuisson à la vapeur.

11. Procédé selon l'une quelconque des revendications 1 à 9, qui comprend une étape facultative de séchage des morceaux de chicorée après l'étape de cuisson à la vapeur, et une étape de torréfaction des morceaux de chicorée.
